# EUROPEAN PATENT APPLICATION

(11) **EP 1 742 493 A1**
(43) Date of publication of application: **10.01.2007**
(21) Application number: 05254205.7
(22) Date of filing: 05.07.2005
(51) Int. Cl.: H04Q 3/42, H04M 3/42

(54) **International dial system**

(71) Applicant: Zyxel Communications Corporation, Hsin-Chu, Taiwan (TW)
(72) Inventor: Chen, Zoneson, Cupertino, CA 95014 (US); Chuang, Gee-Hwan, Santa Clara, CA 95054 (US)
(74) Representative: Dearing-Lambert, Peter Richard

(57) **Abstract**

A communication method that allows end users to place local and long distance calls using international dial plan and is compatible with existing dial plan. The method includes the following steps: (1) receive a dialing number at a local telecommunication switch; (2) distinguishes whether the dialing number starts with an IDD prefix; (3) if not, using an original logic that handles local and long distance calls; (4) if yes, removing the IDD prefix to generate a first new dialing number and comparing and checking whether the latter matches with the Country code; (5) if not, the dialing number is identified as an international call; (6) if yes, the dialing number is identified as a local or long distance call and is checked whether it matches with the Area code; (7) if yes, the dialing number is identified as a local call; otherwise, it is a long distance call.

## Description

### BACKGROUND OF THE INVENTION

1. Field of the Invention

The present invention related to a mechanism of using international dial plan to place local and long distance calls in addition to international call, so that an international travelers may place phone calls easier.

2. Description of the Prior Art

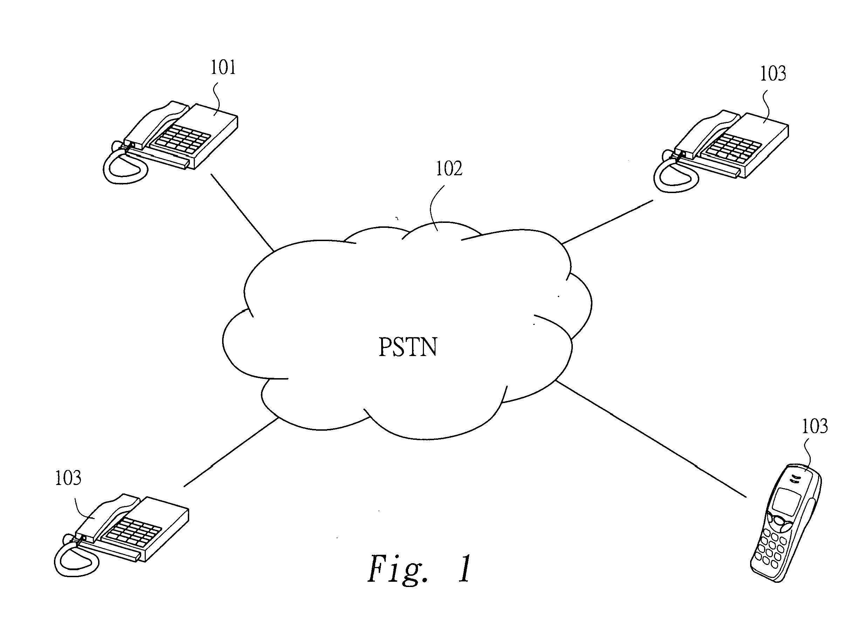

Fig. 1 shows a schematic diagram of a conventional telecommunication system through which phone calls can be made. When a user wants to dial a phone call through the international telecommunication system, a telephone set 101 of a calling party is connected to another phone set 103 of a called party through a public switched telephone network (PSTN) 102. The user at the telephone set 101 should follow the local dial plan to place the call to the telephone set 102.

A telecommunication numbering plan is a set of rules used by the telecommunication industry to define the telephone numbers and how to place phone calls. A telephone number is a sequence of decimal digits (0-9) that is used to identify the destination in a PSTN 102. A dial plan describes the numbers and pattern of digits that a user dials to reach a particular telephone number.

E.164 is an ITU-T (International Telecommunication Union Telecommunication Standardization Sector) recommendation that defines the international public telecommunication numbering plan. According to E.164, a telephone number structure for a geographic area is:

1. Country code ― The Country code is also known as Country Calling code and IDD (International Direct Dialing) code. It is the national prefix to be used when dialing to a particular country from another country.

2. Area code ― The Area code is also known as National Destination code and NDD (National Direct Dialing) code. It usually indicates a specific geographical area.

3. Subscriber number.

So we can identify an E.164 telephone number as: country code-area code-subscriber number ("-" is a separator for easy reading only). Taking ZyXEL headquarter phone number (886-3-5783942) as an example, 886 is the country code of Taiwan, 3 is the area code of Hsin-Chu, and 578-3942 is the subscriber number.

In addition to the format of the telephone numbers, E.164 also defines a list of country codes and the international dial plan. According to E.164 international dial plan, the format of the international dialing number is: +country code-area code-subscriber number. The "+" is an international call prefix that is also known as IDD (International Direct Dialing) prefix. We will use IDD prefix in the rest of this document. Even though E.164 recommends 00 to IDD prefix, it is not well accepted by the telecommunication industry. Each numbering plan in a particular region or country has its own value of IDD prefix. For example, 011 is the IDD prefix defined in North American Numbering Plan. The dialing number is 011-886-3-578-3942 in order to reach ZyXEL headquarter from North American region (USA, Canada, Bermuda, and many Caribbean nations).

E.164 does not cover the dial plan to place local calls and long distance calls. The dial plan for local calls and long distance calls is defined in the regional or countrywide numbering plan. Most of the telecommunication numbering plans requires NDD (National Direct Dialing) prefix for a long distance call, but the value of NND prefix is not a standard either. For example, 1 is the NDD prefix defined in North American Numbering Plan. Taking ZyXEL USA phone number (1-714-632-0882) as an example, 1 is the country code of USA, 714 is the area code of Anaheim in California, and 632-0882 is the subscriber number. The dialing number is 632-0882 for local call and it is 1-714-632-0882 for long distance call (here, 1 is NDD prefix not country code).

It is usually pretty tough for international travelers to figure out how to make phone calls in a new region or country without any help. The reason is because the dial plan is not a universal standard. One of the possible solutions is to let the existing telecommunication switches understand the E.164 international dial plan in addition to the regional or countrywide dial plan.

Unfortunately, E.164 international dial plan may conflict with the local dial plan. Taking Taiwan's IDD prefix as an example, it is 001. The dialing number is 001-1-714-632-0882 to reach ZyXEL USA if we follow the Taiwan dial plan. It is 00-1-714-632-0882 to reach ZyXEL USA if we follow E.164 international dial plan. In this case, it may generate a lot of confusions to both existing customers and telecommunication switches.

It is therefore tried by the inventor to develop a communication method for placing phone calls using international dial plan, in which a mechanism is defined to use international dial plan to place local and long distance calls in addition to international calls for international travelers to place phone calls easier.

### SUMMARY OF THE INVENTION

A primary object of the present invention is to provide a communication method for placing phone calls by using international dial plan. A practical approach to achieve this object is to enhance the telecommunication switch in the PSTN to recognize local calls and long distance calls, in addition to international calls, from the format of international phone calls. Of course, the telecommunication switch still recognizes the local calls and long distance calls based on its dial plan.

To achieve the above and other objects, the communication method for placing phone calls by using international dial plan according to the present invention includes the steps of: receiving a dialing number at a telecommunication switch; identifying whether the dialing number begins with an IDD prefix; if not, then jumping to an original logic that handles local and long distance calls; and if yes, comparing the dialing number with the country code; if the dialing number does not match with the country code, it is identified as an international call; and if the dialing number matches with the country code, it is identified as a local or long distance call placed using the international dial plan; finally comparing the dialing number with the area code; if the dialing number does not match with the area code, it is identified as a local call; and if the dialing number matches with the area code, it is identified as a long distance call.

### BRIEF DESCRIPTION OF THE DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:

Fig. 1 shows a schematic diagram of a conventional telecommunication system;

Fig. 2 shows a schematic diagram of a phone call between the calling party and the called party; and

Figs. 3A and 3B shows the flowchart of the logic flow to use the format of international phone calls for local calls and long distance calls, too.

### DETAILED DESCRIPTION OF THE INVENTION

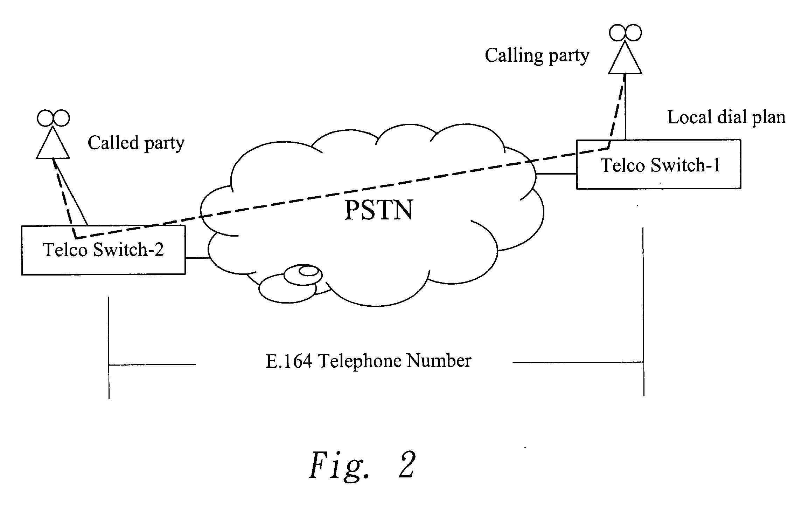

Please refer to Fig. 2 that shows a schematic diagram of a phone call between a calling party and a called party. Since the present invention is developed for international travelers to place phone calls using the well-known E.164 international dial plan, it is necessary to enhance the Telecommunication Switch 1 (Telco Switch-1) at the place of the calling party to recognize local calls and long distance calls, in addition to international calls, from the format of international phone calls. Of course, Telco Switch-1 still recognizes the local calls and long distance calls based on its dial plan.

The rationale behind the present invention is that the format for international phone calls is the most standard one within a dial plan. It usually follows E.164 international dial plan. So the international travelers only need to know the local IDD prefix to place the phone calls. It eliminates the unknown factor to one. There are many ways to publish the local IDD prefix; such as advertisement signs, tour books, maps, sign on public phones, ... It is much easier than publishing the whole dial plan.

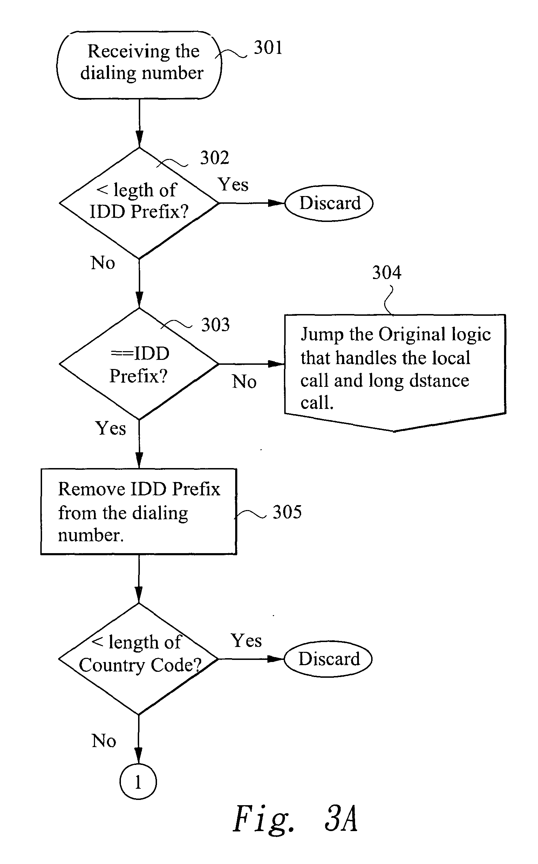

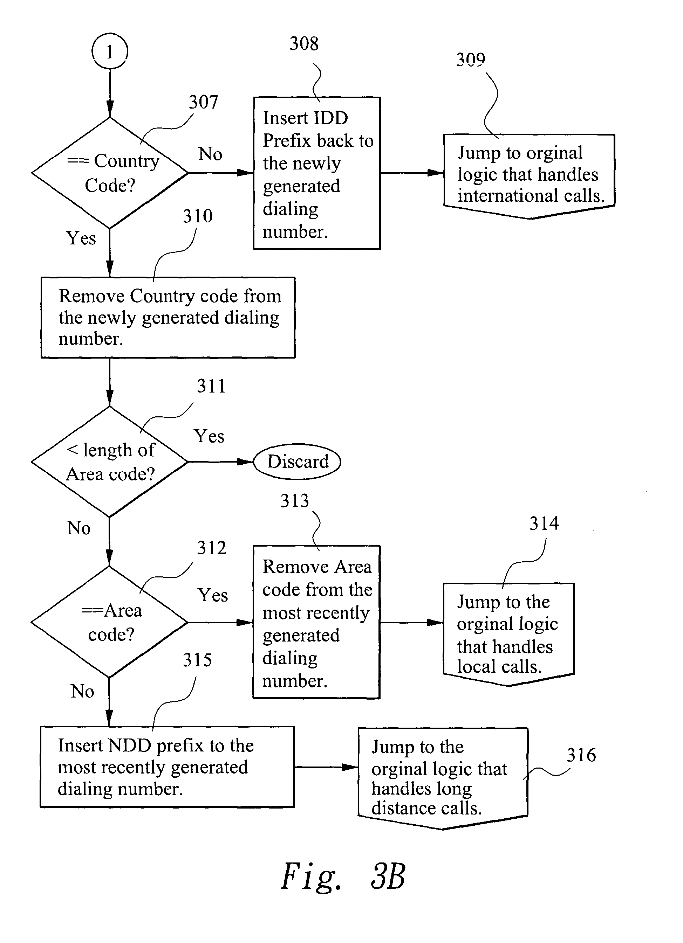

Figs. 3A and 3B is a flowchart showing the logic flow for utilizing the format of international phone calls for local calls and long distance calls, too.

First, a local Telco Switch-1 receives a dialing number, which is a string of digits 0-9. It is assumed that the dialing number follows the local dial plan. Otherwise, it would fail (Step 301).

The Telco Switch-1 would verify whether the dialing number begins with an IDD prefix by checking whether a length of the dialing number is less than that of a standard IDD prefix. If yes, the dialing number is discarded (Step 302).

If the length of the dialing number is longer than that of the IDD prefix, the Telco Switch-1 would further compare and check whether the string of the dialing digits is the same as the IDD prefix (Step 303). If not, the Telco Switch-1 would jump to an original logic that handles the local and long distance calls (Step 304). And, if yes, the IDD prefix is removed from the dialing number to generate a first new dialing number (Step 305).

Then, the Telco Switch-1 would compare and check whether a length of the first new dialing number generated in Step 305 is less than that of a standard Country code (Step 306). If yes, the first new dialing number is discarded.

If the length of the first new dialing number generated in Step 305 is longer than that of the standard Country code, the Telco Switch-1 would further compare and check whether the string of the dialing digits is the same as the Country code (Step 307). If not, the Telco Switch-1 would insert the IDD prefix back to the first new dialing number (Step 308), and then jump to an original logic that handles international calls (Step 309).

Alternatively, if the string of the dialing digits is the same as the Country code, the Telco Switch-1 would then remove the Country code from the first new dialing number to generate a second new dialing number (Step 310).

The Telco Switch-1 would further compare and check whether the second new dialing number has a length less than that of a standard area code (Step 311). If yes, the second new dialing number generated in Step 310 is discarded.

And, if the second new dialing number has a length longer than that of a standard area code, the Telco Switch-1 would compare and check whether the second new dialing number is the same as the Area code (Step 312). If yes, the Area code is removed from the second new dialing number (Step 313) and the Telco Switch-1 jumps to the original logic that handles local calls (Step 314).

Alternatively, if the second new dialing number is not the same as the Area code, the NDD prefix is inserted to the second new dialing number (Step 315) and the Telco Switch-1 jumps to the original logic that handles long distance calls (Step 316).

The present invention has been described with a preferred embodiment thereof and it is understood that many changes and modifications in the described embodiment can be carried out without departing from the scope and the spirit of the invention that is intended to be limited only by the appended claims.

## Claims

1. A communication method for placing phone calls by using international dial plan via a telecommunication switch (Telco Switch-1) in a public switched telephone network (PSTN), comprising the steps of:
a. receiving a dialing number at the Telco Switch-1;
b. comparing and checking whether a string of digits of the dialing number is the same as a local IDD prefix; if not, jumping to an original logic that handles local and long distance calls;
c. removing the IDD prefix from the dialing number to generate a first new dialing number if the string of digits of the dialing number is the same as the IDD prefix;
d. comparing and checking whether a string of digits of the first new dialing number is the same as a Country code; if not, inserting the IDD prefix to the first new dialing number and jumping to an original logic that handles international calls;
e. removing the Country code from the first new dialing number to generate a second new dialing number if the string of digits of the first new dialing number is not the same as the Country code;
f. comparing and checking whether a string of digits of the second new dialing number is the same as an Area code; if yes, removing the Area code from the second new dialing number and jumping to the original logic that handles local calls; and
g. inserting an NDD prefix to the second new dialing number and jumping to the original logic that handles long distance calls.

2. The communication method for placing phone calls by using international dial plan via a Telco Switch-1 in a PSTN as claimed in claim 1, wherein the dialing number follows an E.164 international dial plan.

3. The communication method for placing phone calls by using international dial plan via a Telco Switch-1 in a PSTN as claimed in claim 2, wherein the E.164 international dial plan is "+Country code-Area code-Subscriber number".

4. The communication method for placing phone calls by using international dial plan via a Telco Switch-1 in a PSTN as claimed in claim 3, wherein the Country code is an International Direct Dialing (IDD) code, which is a national prefix to be used when dialing to a particular country from another country.

5. The communication method for placing phone calls by using international dial plan via a Telco Switch-1 in a PSTN as claimed in claim 3, wherein the Area code is a National Direct Dialing (NDD) code, which usually indicates a specific geographical area.

6. The communication method for placing phone calls by using international dial plan via a Telco Switch-1 in a PSTN as claimed in claim 1, wherein the dialing number is a sequence of decimal digits 0-9.

7. The communication method for placing phone calls by using international dial plan via a Telco Switch-1 in a PSTN as claimed in claim 1, wherein the step a further comprises the steps of comparing and checking whether the dialing number has a length less than that of a standard IDD prefix; and discarding the dialing number if it has a length less than that of the standard IDD prefix.

8. The communication method for placing phone calls by using international dial plan via a Telco Switch-1 in a PSTN as claimed in claim 1, wherein the step c further comprises the steps of comparing and checking whether the first new dialing number has a length less than that of a standard Country code; and discarding the first new dialing number if it has a length less than that of the Country code.

9. The communication method for placing phone calls by using international dial plan via a Telco Switch-1 in a PSTN as claimed in claim 1, wherein the step e further comprises the steps of comparing and checking whether the second new dialing number has a length less than that of a standard Area code; and discarding the second new dialing number if it has a length less than that of the Country code.
